# EUROPEAN PATENT APPLICATION

(11) **EP 4 391 479 A1**
(43) Date of publication of application: **26.06.2024**
(21) Application number: 23216579.5
(22) Date of filing: 14.12.2023
(51) Int. Cl.: H04L 45/00, H04L 45/02, H04L 45/42

(54) **EXPRESSING TRAFFIC ENGINEERING INTENTS ON SUB PATHS**

(30) Priority: 20.12.2022 US 202218069081
(71) Applicant: Nokia Solutions and Networks Oy, 02610 Espoo (FI)
(72) Inventor: STONE, Andrew, Ottawa, K1T1T9 (CA)
(74) Representative: Zinsinger, Norbert

(57) **Abstract**

Various embodiments relate to a path computation element configured to calculate a path through a network, including: at least one processor; and at least one memory storing instructions, that when executed by the at least one processor, cause the path computation element at least to: receive a TE path expression including a plurality of segments; calculate first portion of the path through the network based upon a first segment of the plurality of segments of the TE path expression; determine if the calculated path has reached its end point; calculate a next portion of the path through the network based upon a next segment of the plurality of segments of the TE path expression when the calculated path has not reached its end point; and perform post processing on the calculated path based upon the received TE path expression when the calculated path has reached its end point.

## Description

### TECHNICAL FIELD

Example embodiments disclosed herein relate to expressing traffic engineering intents on sub paths.

### BACKGROUND

Networks may include data centers, wide area networks (WANs), core networks, access networks, etc. As data is communicated from one portion of the network to another, the data may traverse a variety of different portions of the network. Each of these portions have different architectures and capabilities. When a data path through the network is computed, end to end metrics are used to do the path computations independent of the characteristics and capabilities of the different underlying network portions.

### SUMMARY

A summary of various exemplary embodiments is presented below. Some simplifications and omissions may be made in the following summary, which is intended to highlight and introduce some aspects of the various exemplary embodiments, but not to limit the scope of the invention. Detailed descriptions of an exemplary embodiment adequate to allow those of ordinary skill in the art to make and use the inventive concepts will follow in later sections.

Various embodiments relate to a path computation element configured to calculate a path through a network, including: at least one processor; and at least one memory storing instructions, that when executed by the at least one processor, cause the path computation element at least to: receive a traffic engineered (TE) path expression including a plurality of segments; calculate first portion of the path through the network based upon a first segment of the plurality of segments of the TE path expression; determine if the calculated path has reached its end point; calculate a next portion of the path through the network based upon a next segment of the plurality of segments of the TE path expression; and perform post processing on the calculated path based upon the received TE path expression.

Various embodiments are described, wherein the segments of the plurality of segments includes an instruction, a terminator, and a quantification.

Various embodiments are described, wherein the instruction includes parameters relating to a portion of the network.

Various embodiments are described, wherein the terminator identifies a type of node in the network where a portion of the path associated with the segment should end.

Various embodiments are described, wherein quantification defines a number of hops allowed along a portion of the path associated with the segment.

Various embodiments are described, wherein each segment of the plurality of segments is associated with a portion of the network.

Various embodiments are described, wherein performing post processing on the calculated path based upon the received TE path expression includes performing label stack reduction along the calculated path based upon the TE path expression.

Further various embodiments relate to a path computation element configured to calculate a path through a network, including: at least one processor; and at least one memory storing instructions, that when executed by the at least one processor, cause the path computation element at least to: receive a TE path expression including a plurality of segments wherein the segments of the plurality of segments includes an instruction, a terminator, and a quantification; calculate first portion of the path through the network based upon a first segment of the plurality of segments of the TE path expression; determine if the calculated path has reached its end point; and calculate a next portion of the path through the network based upon a next segment of the plurality of segments of the TE path expression.

Various embodiments are described, further including performing post processing on the calculated path based upon the received TE path expression.

Various embodiments are described, wherein performing post processing on the calculated path based upon the received TE path expression includes performing label stack reduction along the calculated path based upon the TE path expression.

Various embodiments are described, wherein the instruction includes parameters relating to a portion of the network.

Various embodiments are described, wherein the terminator identifies a type of node in the network where a portion of the path associated with the segment should end.

Various embodiments are described, wherein quantification defines a number of hops allowed along a portion of the path associated with the segment.

Various embodiments are described, wherein each segment of the plurality of segments is associated with a portion of the network.

Further various embodiments relate to a method to calculate a path through a network, including: receiving a TE path expression including a plurality of segments wherein the segments of the plurality of segments includes an instruction, a terminator, and a quantification; calculating first portion of the path through the network based upon a first segment of the plurality of segments of the TE path expression; determining if the calculated path has reached its end point; and calculating a next portion of the path through the network based upon a next segment of the plurality of segments of the TE path expression.

Various embodiments are described, further including performing post processing on the calculated path based upon the received TE path expression.

Various embodiments are described, wherein performing post processing on the calculated path based upon the received TE path expression includes performing label stack reduction along the calculated path based upon the TE path expression.

Various embodiments are described, wherein the instruction includes parameters relating to a portion of the network.

Various embodiments are described, wherein the terminator identifies a type of node in the network where a portion of the path associated with the segment should end.

Various embodiments are described, wherein quantification defines a number of hops allowed along a portion of the path associated with the segment.

Various embodiments are described, wherein each segment of the plurality of segments is associated with a portion of the network.

Further, various embodiments relate to a path computation element configured to calculate a path through a network, comprising: at least one processor; and at least one memory storing instructions, that when executed by the at least one processor, cause the path computation element at least to: receive a traffic engineered (TE) path expression including a plurality of segments; calculate first portion of the path through the network based upon a first segment of the plurality of segments of the TE path expression; determine if the calculated path has reached its end point; calculate a next portion of the path through the network based upon a next segment of the plurality of segments of the TE path expression when the calculated path has not reached its end point; and perform post processing on the calculated path based upon the received TE path expression when the calculated path has reached its end point.

Various embodiments are described, wherein the segments of the plurality of segments includes an instruction, a terminator, and a quantification.

Various embodiments are described, wherein the instruction includes parameters relating to a portion of the network.

Various embodiments are described, wherein the terminator identifies a type of node in the network where a portion of the path associated with the segment should end.

Various embodiments are described, wherein quantification defines a number of hops allowed along a portion of the path associated with the segment.

Various embodiments are described, wherein each segment of the plurality of segments is associated with a portion of the network.

Various embodiments are described, wherein performing post processing on the calculated path based upon the received TE path expression includes performing label stack reduction along the calculated path based upon the TE path expression.

Further, various embodiments relate to a path computation element configured to calculate a path through a network, comprising: at least one processor; and at least one memory storing instructions, that when executed by the at least one processor, cause the path computation element at least to: receive a TE path expression including a plurality of segments wherein the segments of the plurality of segments includes an instruction, a terminator, and a quantification; calculate first portion of the path through the network based upon a first segment of the plurality of segments of the TE path expression; determine if the calculated path has reached its end point; and calculate a next portion of the path through the network based upon a next segment of the plurality of segments of the TE path expression when the calculated path has not reached its end point.

Various embodiments are described, further comprising performing post processing on the calculated path based upon the received TE path expression when the calculated path has reached its end point.

Various embodiments are described, wherein performing post processing on the calculated path based upon the received TE path expression includes performing label stack reduction along the calculated path based upon the TE path expression.

Various embodiments are described, wherein the instruction includes parameters relating to a portion of the network.

Various embodiments are described, wherein the terminator identifies a type of node in the network where a portion of the path associated with the segment should end.

Various embodiments are described, wherein quantification defines a number of hops allowed along a portion of the path associated with the segment.

Various embodiments are described, wherein each segment of the plurality of segments is associated with a portion of the network.

Further, various embodiments relate to a method to calculate a path through a network, comprising: receiving a TE path expression including a plurality of segments wherein the segments of the plurality of segments includes an instruction, a terminator, and a quantification; calculating first portion of the path through the network based upon a first segment of the plurality of segments of the TE path expression; determining if the calculated path has reached its end point; and calculating a next portion of the path through the network based upon a next segment of the plurality of segments of the TE path expression when the calculated path has not reached its end point.

Various embodiments are described, wherein the method further comprises performing post processing on the calculated path based upon the received TE path expression when the calculated path has reached its end point.

Various embodiments are described, wherein performing post processing on the calculated path based upon the received TE path expression includes performing label stack reduction along the calculated path based upon the TE path expression.

Various embodiments are described, wherein the instruction includes parameters relating to a portion of the network.

Various embodiments are described, wherein the terminator identifies a type of node in the network where a portion of the path associated with the segment should end.

Various embodiments are described, wherein quantification defines a number of hops allowed along a portion of the path associated with the segment.

### BRIEF DESCRIPTION OF THE DRAWINGS

Additional objects and features of the invention will be more readily apparent from the following detailed description and appended claims when taken in conjunction with the drawings. Although several example embodiments are illustrated and described, like reference numerals identify like parts in each of the figures in the following list.
FIG. 1 illustrates a network.
FIG. 2 illustrates the flow of traffic engineering criteria to produce an end-to-end path.
FIG. 3 illustrates splitting up the TE path criteria for different portions of the network.
FIG. 4 illustrates a TE path expression that provides segments to define criteria for different portions of the network.
FIG. 5 illustrates the application of a path request using a TE path expression to the network.
FIG. 6 illustrates a method of calculating a path using a TE path expression.
FIG. 7 illustrates an exemplary hardware diagram for implementing the PCE or any other device for calculating paths through a network.

To facilitate understanding, identical reference numerals have been used to designate elements having substantially the same or similar structure and/or substantially the same or similar function.

### DETAILED DESCRIPTION

It should be understood that the figures are merely schematic and are not drawn to scale. It should also be understood that the same reference numerals are used throughout the figures to indicate the same or similar parts.

The descriptions and drawings illustrate the principles of various example embodiments. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art and are to be construed as being without limitation to such specifically recited examples and conditions. Additionally, the term, "or," as used herein, refers to a non-exclusive or (i.e., and/or), unless otherwise indicated (e.g., "or else" or "or in the alternative"). Also, the various example embodiments described herein are not necessarily mutually exclusive, as some example embodiments can be combined with one or more other example embodiments to form new example embodiments. Descriptors such as "first," "second," "third," etc., are not meant to limit the order of elements discussed, are used to distinguish one element from the next, and are generally interchangeable. Values such as maximum or minimum may be predetermined and set to different values based on the application.

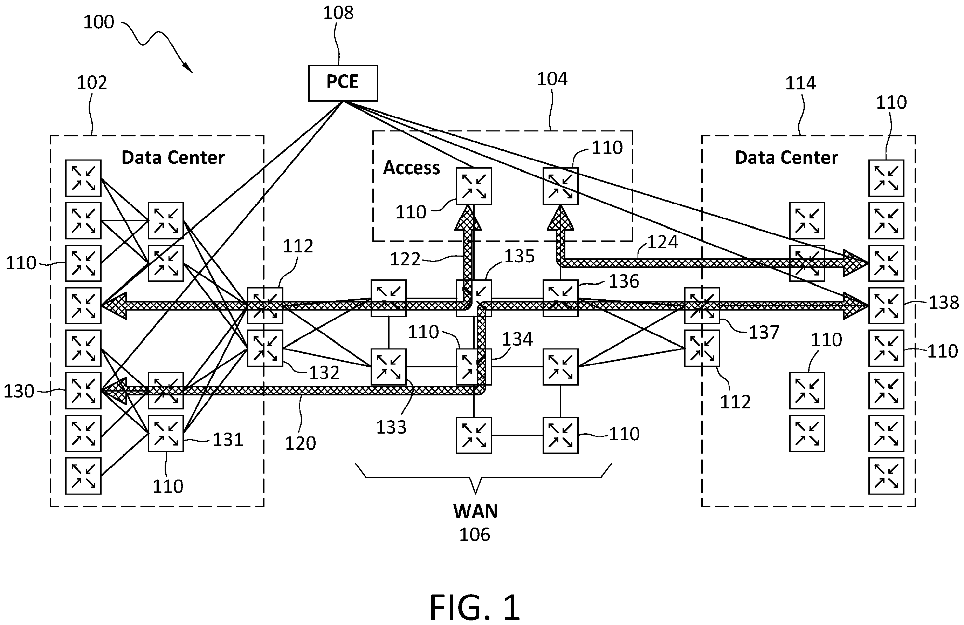

FIG. 1 illustrates a network. The network 100 may include various portions such as a data center 102, a WAN 106, data center 114, access 104, or other types of contained divisions or organizations of the network. Each of these portions of the network are made up of routers 110 and border routers 112. The routers 110 act as switching elements in the network that receive traffic and then switch it to the next point in the network. The border routers 112 typically are at an edge of a domain and help to provide access to the network in a structured and secure manner.

These different portions of the network service different purposes and have different architectures and capabilities and may also be used for general scaling, organization, different company/division ownership, etc. For example, the data center 102 may deploy CLOS (a type of multistage circuit-switching network) architecture. This leads to a large number of equal cost paths through the data center 102. Further, the data center 102 has low delay and high bandwidth. The same would be true for data center 114. The WAN 106 network design is quite variable and may include rings, ladders, etc. The WAN 106 may have a lower number of equal cost paths. Also, the WAN 106 may have higher delay and a higher utilization. The access 104 provides access to users. It may have a low number of equal cost paths. Further, it may have a low to medium delay and low utilization.

As each of these portions of the network 100 are independent, a method for routing traffic through the network 100 is needed. Segment routing, including for example multiprotocol label switching (SR-MPLS), is one method to route traffic from one point to another through the network 100. SR-MPLS adds routing information or path instructions to the header of packets sent along a SR-MPLS tunnel that directs the traffic through the network 100. FIG. 1 illustrates three paths through the network 100: path 120; path 122; and path 124. The path 120 goes from router 130 to router 138 via routers 131-137.

A path computation element (PCE) 108 learns the overall architecture of the network 100. The PCE then can then compute end-to-end paths through the network 100 using segment routing based upon the requirements of the traffic to be carried over the paths. This creates a traffic engineered tunnel to carry the end-to-end traffic.

It is noted that segment routing pushes the routing instructions onto the packet. This then means that the router does more work in the data plane to process the header information to correctly direct the packets to the next point along the path. Routers may be limited in the number of segments that they can support. For example, in path 120 there are eight hops from one end to the other. To encode a fully explicit traffic engineering path, the source router 130 may not have support to impose the required segments on the traffic to be forwarded.

In order to address these limitations, the actual characteristics of the path may be considered. For example, 5G traffic may need to be carried between two data centers 102. Such traffic requires the lowest delay possible, and a large amount of bandwidth is required, for example, 2Gb. Further, the source router has a limitation which results in the traffic request having a maximum segment depth of 4. This is the data that will be used by the PCE 108 to calculate the tunnel through the network 100 for the traffic. Looking at path 120 it can be seen that it starts in a data center 102 then traverses the WAN 106 and then ends in another data center 114. As mentioned above, the data center 102 has a high number of equal cost paths with low delay and high bandwidth. This is different from the WAN 106 that will have lower number of equal cost paths. Further, each of these paths will have different delay and some of them will have a delay that does not support the delay requirement in the traffic request. Further, the traffic in the WAN 106 is very dense resulting a large number of tunnels through the WAN 106 which increases utilization. The PCE 108 may distribute traffic away from a traditional shortest path through the WAN 106 to optimize bandwidth, but this may lead to greater delay. When the PCE 108 discovers the network and performs a path search, it does not differentiation the different portions of the network 100 that have different characteristics. It just views the network 100 and processed received request as a whole.

One of the problems in specifying a path through the network 100, is the maximum segment depth. For example, path 120 has 8 hops which would require 8 sets of instruction in the packet to explicitly specify the path 120. Various compression techniques have been developed to reduce the number of segments required to define the path 120. This may for example reduce 8 instructions down to 3 or 4 instructions.

An adjacency segment ID represents a direct connection between two routers. A segment ID (SID) may be defined that spans multiple routers 110. Various types of label stack reduction techniques may be used to produce different types of segments including node SID (NSID), and binding SID (BSID). Each of these different approaches have different benefits and issues. Depending upon the specific network architecture and the traffic requirements one of the different label stack reduction techniques may be used.

For path 120 the traffic starts at router 130 in the data center 102 and exits the data center at router 132. Only one level of routers 110 is shown between router 130 and router 132, but many other levels may be present as well. From a practical standpoint, the traffic along path 120 just needs to get from router 130 to 132 and the precise route in the data center 102 does not matter. This is because the bandwidth is very high and the delay very low in the data center 102. So, any path from router 130 to router 132 in the data center 102 may be used. A single node SID may be used to define this segment, and this would reduce the segment depth needed to define the path 120. The problem is that the PCE 108 does not understand the specific characteristics and capabilities of this portion of the network as it attempts to come up with a path through the network from router 130 to router 138. This leads to the realization that the traffic engineering requirements for the path 120 may be relaxed in the data center 102. The same would be true for data center 114. For example, the bandwidth is irrelevant in the calculation of the path through the data center 102 because high bandwidth is available along any path through the data center 102.

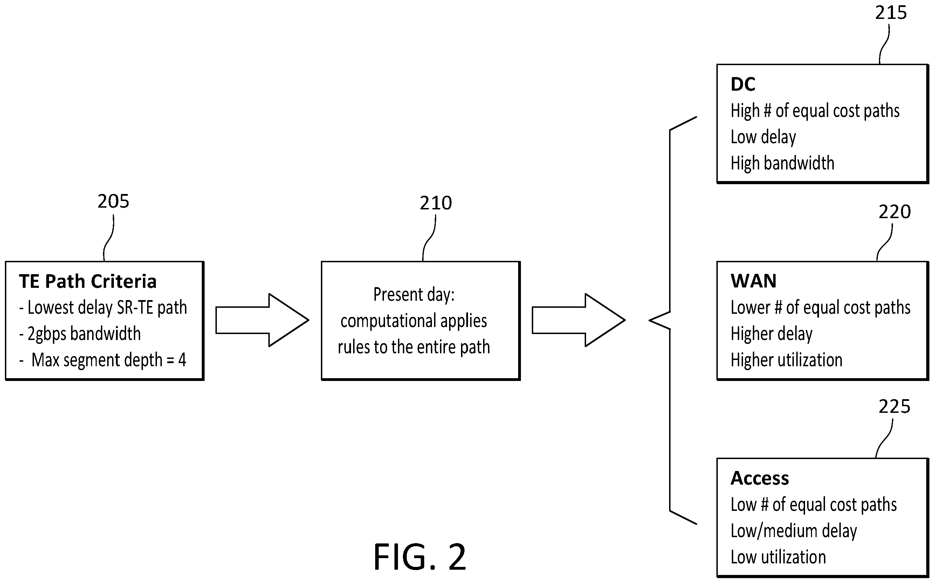

FIG. 2 illustrates the flow of traffic engineering criteria to produce an end-to-end path. The traffic engineered (TE) path criteria 205 are provided for the path. For example, the path should be a lowest delay segment routed - traffic engineered (SR-TE) path with a bandwidth of 2Gbs and a maximum segment depth of 4. A PCE applies the rules and TE path criteria to the entire path to generate the end-to-end path that meets the TE path criteria 210. As previously stated, the data center 102 has characteristics 215 that are different from the WAN characteristics 220 and the access characteristics 225. This leads to the fact that the path computation process does not appreciate that the TE engineering criteria are not an issue for various portions of the network 100 and therefore are not really relevant to the path computation. This means that for various portions of the path 120, the TE path criteria may be relaxed or ignored, but the PCE is currently not able to do that because the path needs to be computed with the TE path criteria in mind at all points of the path.

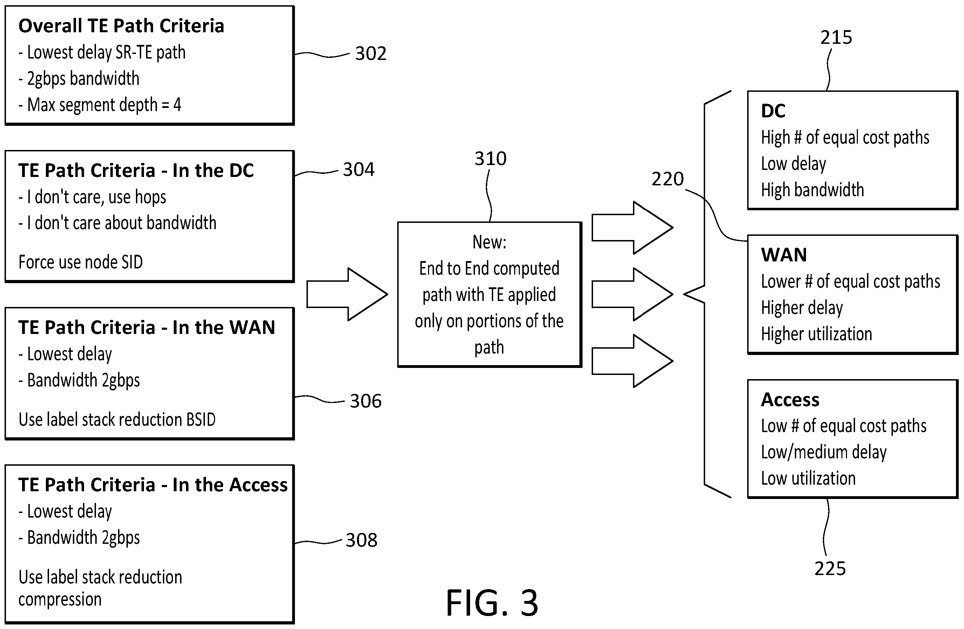

FIG. 3 illustrates splitting up the TE path criteria for different portions of the network 100. The overall TE path criteria 302 for the path may be the same as in FIG. 2., that is, lowest delay, 2Gbs, and a maximum segment depth for 4. Various TE path criteria may now be specified for each portion of the network 100 to support the overall TE path criteria 302. The TE path criteria 304 for the data center 102 may be: do not care about bandwidth, delay, or number of hops and force the use of NSID. Because the data center 102 has high bandwidth and low delay independent of the number of hops required in the data center 102, these requirements can be relaxed and/or ignored. The use of NSID may be forced to define that the traffic starts at a specific router in the data center 102 and then leaves the data center 102 at a specific router or specific type of router. So, in the example for path 120, the NSID would be forced between router 130 and router 132.

The TE path criteria 306 for the WAN 106 may be: lowest delay and a bandwidth of 2Gbs and the use of BSID may be forced to reduce the number of labels needed in the packets to traverse the WAN 106. Because the WAN 106 is subject to potential higher delay, delay should be specified in the WAN TE path criteria 306. The same is true for bandwidth, as the WAN 106 experiences high bandwidth utilization, the required bandwidth of 2Gbs needs to be specified in the WAN TE path criteria 306. Further, forcing the use of BSID will reduce the number of segments that need to be defined to traverse the WAN 106 and this will support the overall TE path criteria for maximum segment depth.

The TE path criteria 308 for the access 104 may be: lowest delay and a bandwidth of 2Gbs and the use label stake reduction compression is specified. Because the bandwidth availability of the access 104 is variable bandwidth needs to be specified. Further, as access 104 may be subject to medium delays, lowest delay is specified to ensure that the lowest delay criteria is met. In this situation any label stack reduction compression may be used to reduce the number segments needed to traverse the access 104 and this will support the overall TE path criteria for maximum segment depth. Note that the TE path criteria described above are just examples of different criteria that may be used. Many other criteria exist and may later be defined in order to specify the TE path criteria.

The application of the TE path criteria 304, 306, and 308 will lead to an end to end computed path with traffic engineering applied on portions of the path as specified by the TE path criteria 304, 306, and 308.

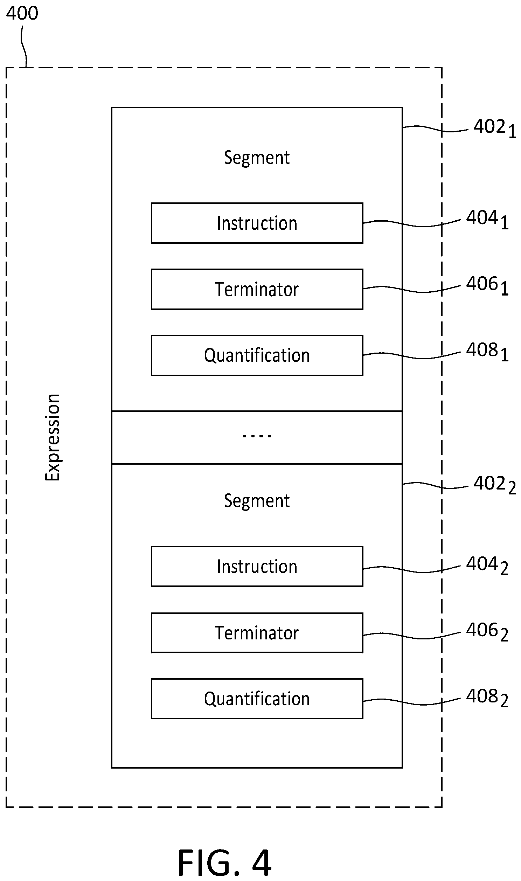

In order to provide finer control of determining the path to respect an operators' network design decisions and requirements, a new data structure may be used to define the TE path criteria. FIG. 4 illustrates a TE path expression that provides segments to define criteria for different portions of the network. The TE path expression 400 includes segments 402₁ and 402₂. Each segment 402ₙ includes instructions 404ₙ, terminator 406ₙ, and quantification 408ₙ. The TE path expression 400 specifies match criteria on the network topology that may be is applied to the path. As described in FIG. 4, the TE path expression 400 may be a top level containment which is attached to a path calculation request. The TE path expression contains a list of expression segments 402ₙ. The expression segment 402ₙ defines the match rules and traffic engineering rules or behavior for a portion of a path. The instruction 404ₙ includes the traffic engineering rules or behavior one wishes to invoke on the path. The criteria in an instruction 404ₙ are agnostic to the solution and may be domain implementation specific. The instructions may include various TE path criteria, for example, bandwidth, delay, etc. It may also contain parameters that include rules that specify how the path is to be processed. A certain label stack reduction technique may be specified. The instructions that are found here may include the sorts of instructions and criteria that are currently used to specify the end-to-end TE path criteria.

The terminator 406ₙ may be a match statement for a network element. This match statement can be on various properties of a network element, such as, match on name, match on an IP address, match on border router status, match on portion of defined domain, match on a device type, etc. This will define the end of the portion of the path to which the segment 402ₙ applies.

The quantification 408ₙ indicates the number of links in the portion of the path to be associated with the segment 402ₙ. The quantification 408ₙ value may be 1, 2, or any value. This is a length qualifier for the path.

The terminator and qualifier may be combined to allow a user to make statements such as "Match on any number of links until a border is met" or "Match on up to 2 links" or "match on any link and any router". Thus, the TE path expression 400 allows for great flexibility in defining TE criteria for different portions of the network in order to calculate the path through the network.

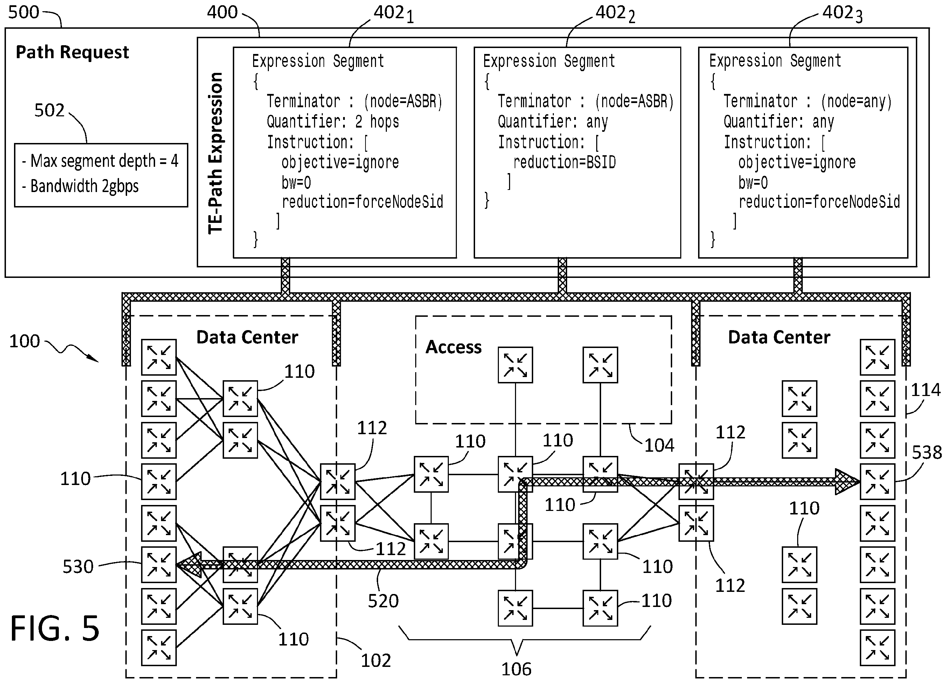

FIG. 5 illustrates the application of a path request using a TE path expression to the network. A path request 500 may include general requirement 502 and a TE path expression 400. The general requirements in this example include a maximum segment depth of 4 and a bandwidth of 2Gbs. As the path will traverse three different sections of the network 100, the TE path expression 400 includes three expression segments 402₁, 402₂, 402₃. The expression segment 402₁ is applicable to the data center 102. The expression segment 402₂ is applicable to the WAN 106. The expression segment 402₃ is applicable to the data center 114.

The expression segment 402₁ is illustrated using pseudo code. The expression statement 402₁ includes a Terminator that defines the end of this path portion at an autonomous system boundary router (ASBR). For example, the border routers 112 in the data center 102 may be ASBRs. Therefore, the PCE will calculate a path through the data center 102 until it reaches one of the border routers 112. The path will be limited to two hops in this case as specified by the Quantifier. Further, the Instruction does not include any particular objective, so the objective is set to ignore. The bandwidth is set to 0 because there are no practical bandwidth limitations in the data center 102. The parameter reduction specifies whether label stack reduction is performed on the path. In this case, the use of NSID is forced for the label stack reduction. So, the PCE will calculate a portion of the path from the router 530 to one of the border routers 112 in the data center 102. For example, the PCE may start calculating the path using for example a modified constraint shortest path search algorithm such as Dijkstra's shortest path algorithm that applies different constrains or behavior on portions of the path during path expansion and after a result is found. As it calculates it uses the expression segment 402₁ to provide limitations on the path. It will search until it reaches the one of the border routers 112 in the data center 102 and as it then seeks to further the path. At this point the next expression segment will be used define the further path calculations.

The expression segment 402₂ is illustrated using pseudo code. This expression statement 402₂ will provide the parameters for the further path calculation. The expression statement 402₂ includes a Terminator that defines the end of this path portion at an ASBR. For example, the border routers 112 in the data center 114 may be ASBRs. Therefore, the PCE will calculate a path through the WAN 106 until it reaches one of the border routers 112 in the data center 114. A specific value is not set for the Quantifier in this specific situation so there is no limit on the number of hops. Further, the Instruction only includes the parameter reduction, which specifies that BSIS is used for the label stack reduction. So, the PCE will calculate a portion of the path that extends from the first portion to one of the border routers 112 in the data center 114.

The expression segment 402s is illustrated using pseudo code. The expression statement 402₃ includes a Terminator that defines the end of this path as any node in the data center 114 because the data traffic ends in the data center 114. Therefore, the PCE will calculate a path through the data center 102 until it reaches one of the nodes in the data center 114 for example a node associated with router 538. A specific value is not set for the Quantifier in this specific situation so there is no limit on the number of hops. Further, the Instruction does not include any particular objective, so the objective is set to ignore. The bandwidth is set to 0 because there are no practical bandwidth limitations in the data center 102. The parameter reduction, which specified whether label stack reduction is performed on the path. In this case, the use NSID is forced for the label stack reduction. So, the PCE will calculate a portion of the path that extends from the second portion to one of the nodes in the data center 114 such as a node associated with router 538. This results in the end to end path 520 through the network.

The expression included segments allows for a very flexible description of the requirement for a path through a network with different network portions. The instructions included in the segments are very flexible and can take on a wide range of forms and values in order to specify the requirements for the path. For example, the instructions may include various values such as bandwidth, cost, distance, hops, latency, route strategy, SID type, etc. Any of the ways currently in use for describing and specifying paths may be used in the segments. Further, the instructions may vary by network type or hierarchy. For example, the instructions for an optical network may be different from other networks because of it is unique structure and underlying technology. The instructions may also use flags to define different characteristics of the path.

As a user defines segments that apply to various portions of their network, these segments may be defined in a way that the basic structure of the segments may be reused to construct new TE path expressions to define paths through the network. The use of segments and TE path expressions allows for the network operator to conceptualize the definition of a path that may be reused. For example, the structure of a TE path expression may be defined, and different instantiations of that TE path expression may be used with different parameter sets to define paths through the network. The use of match statements allows for such flexibility in defining the path. For example, the segment may have a termination that is defined by a certain type of device rather than a specific IP address. Such a segment could be applied in various instantiations. This allows for many paths to be defined by reusing a TE path expression and without the need for hardcoding individual descriptions of numerous paths. The use of TE path expressions with segments provides a network user the power to describe their network behavior on the path that they are seeking to implement and to use this more specific information to calculate paths.

Further, it is noted that the terminator and quantification work together to define the extent of the path defined by a segment. In some cases, the terminator may be defined as a certain type of device that signals the end of a certain portion of the network. As in the examples above, defining the terminator as an ASBR provides such a terminator. In the example of the data center 102, if the quantification is set to 2, then the same path results as specifying the terminator as an ASBR. Because the structure of the data center 102 has only two hops to get to either of the border routers 112, this would mean that the path will always go through one of the two boarder routers 112. This again allows for great flexibility in defining a path using the TE path expression and segments.

The TE path expression can be used during shortest path calculation or during post-processing of a computed path or during both. For example, during the shortest path calculations each expansion branch in a shortest path search like Dijkstra can be matched upon and rules enforced that are found in the segments of the TE path expression. Also, in certain portions of the network, bandwidth restrictions may be ignored as described above.

After the path is defined, post processing may be applied that then implements additional instructions defined in the TE path expression. For example, the use of label stack reduction may be applied as post processing.

For post processing, the following pseudo code algorithm may be used to execute the expression:

```
TePathExpressionInterpreter
 INPUT: path (series of hops), Expression
 OUTPUT: List[ {path:expressionSegment} ]
 -------------
 result = list[]
 hopCollection = list[]
 currentSegment = expression. segments. next()
```

For each hop in the path:

```
  hopCollection. add(hop)
  terminate = matchesTerminator(currentSegment, hop) OR matchesQuantifier(currentSegment,
 hopCollection) OR noMoreHopsInPath
```

if terminate:

```
     result.add ({ hops: hopCollection, expressionSegment: currentSegment })
     hopCollection. clear()
     currentSegment = expressions.segments.next()
     if more hops and currentSegment is none -> error()
```

This pseudo code receives a calculated path. It then goes through the path hop by hop and preforms any additional post processing specified by the segments in the TE path expression. A mapping of hops to Expression Segment is known from the result. For each result entry, ExpressionSegment.instruction may be applied to that series of hops (for example, replace the collection of hops with just a node SID).

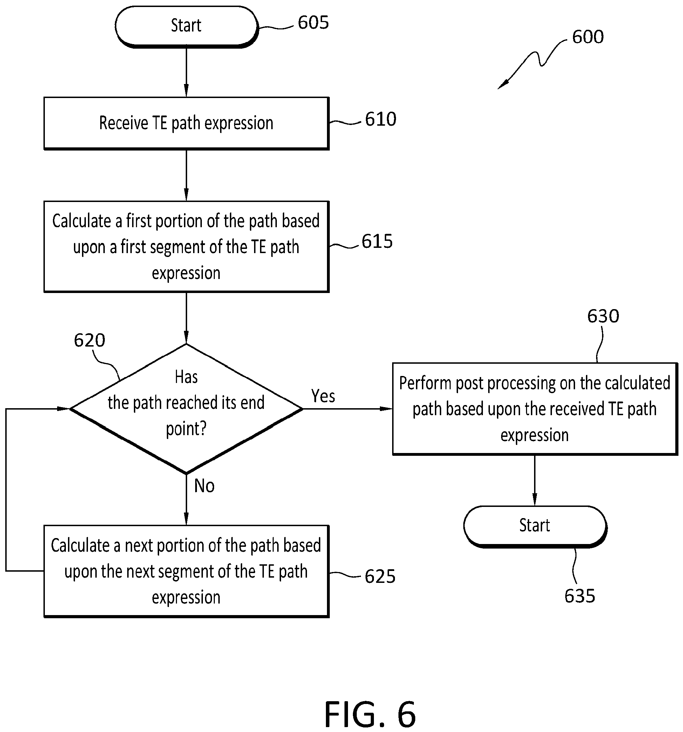

FIG. 6 illustrates a method of calculating a path using a TE path expression. The method 600 begins at 605 and then receives a TE path expression 610. The TE path expression will include segments as described herein that provide instructions and values to be used in calculating different portions of the path through the network. Next, the method 600 calculates a first portion of the path based upon a first segment of the TE path expression 615. These path calculations may be carried out as described herein using the instructions and values in the first segment of the TE path expression. Then the method determines if the path calculated has reached its destination 620. If not, then the method 600 calculates a next portion of the path based upon the next segment of the TE path expression 625. These path calculations may be carried out as described herein using the instructions and values in the next segment of the TE path expression. The method 600 then returns to step 620 to determine of the path has reached its end point. If the path has reached its end point, then the method performs post processing on the calculated path based upon the received TE path expression 630. This post processing may be carried out as described herein. The method 600 then ends at 635. The method 600 may be carried out by the PCE 108.

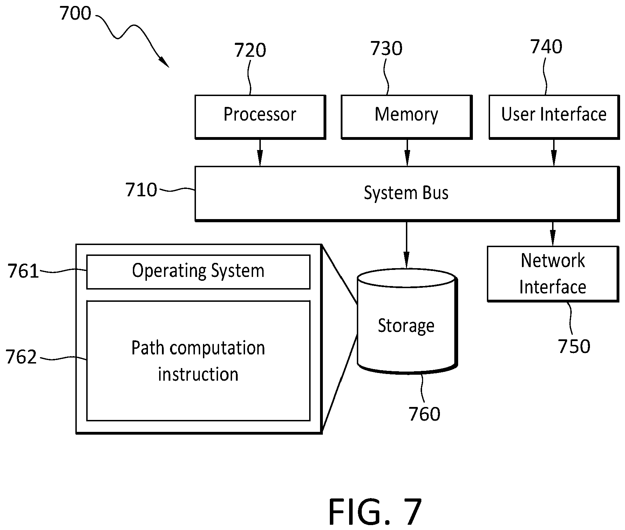

FIG. 7 illustrates an exemplary hardware diagram 700 for implementing the PCE or any other device for calculating paths through a network. As shown, the device 700 includes a processor 720, memory 730, user interface 740, network interface 750, and storage 760 interconnected via one or more system buses 710. It will be understood that FIG. 7 constitutes, in some respects, an abstraction and that the actual organization of the components of the device 700 may be more complex than illustrated.

The processor 720 may be any hardware device capable of executing instructions stored in memory 730 or storage 760 or otherwise processing data. As such, the processor may include a microprocessor, microcontroller, graphics processing unit (GPU), neural network processor, field programmable gate array (FPGA), application-specific integrated circuit (ASIC), or other similar devices.

The memory 730 may include various memories such as, for example L1, L2, or L3 cache or system memory. As such, the memory 730 may include static random-access memory (SRAM), dynamic RAM (DRAM), flash memory, read only memory (ROM), or other similar memory devices.

The user interface 740 may include one or more devices for enabling communication with a user such as an administrator. For example, the user interface 740 may include a display, a touch interface, a mouse, and/or a keyboard for receiving user commands. In some embodiments, the user interface 740 may include a command line interface or graphical user interface that may be presented to a remote terminal via the network interface 750.

The network interface 750 may include one or more devices for enabling communication with other hardware devices. For example, the network interface 750 may include a network interface card (NIC) configured to communicate according to the Ethernet protocol or other communications protocols, including wireless protocols. Additionally, the network interface 750 may implement a TCP/IP stack for communication according to the TCP/IP protocols. Various alternative or additional hardware or configurations for the network interface 750 will be apparent.

The storage 760 may include one or more machine-readable storage media such as read-only memory (ROM), random-access memory (RAM), magnetic disk storage media, optical storage media, flash-memory devices, or similar storage media. In various embodiments, the storage 760 may store instructions for execution by the processor 720 or data upon with the processor 720 may operate. For example, the storage 760 may store a base operating system 761 for controlling various basic operations of the hardware 700. The storage 760 may include instructions 762 for carrying out the path calculation method 600.

It will be apparent that various information described as stored in the storage 760 may be additionally or alternatively stored in the memory 730. In this respect, the memory 730 may also be considered to constitute a "storage device" and the storage 760 may be considered a "memory." Various other arrangements will be apparent. Further, the memory 730 and storage 760 may both be considered to be "non-transitory machine-readable media." As used herein, the term "non-transitory" will be understood to exclude transitory signals but to include all forms of storage, including both volatile and non-volatile memories.

The system bus 710 allows communication between the processor 720, memory 730, user interface 740, storage 760, and network interface 750.

While the host device 700 is shown as including one of each described component, the various components may be duplicated in various embodiments. For example, the processor 720 may include multiple microprocessors that are configured to independently execute the methods described herein or are configured to perform steps or subroutines of the methods described herein such that the multiple processors cooperate to achieve the functionality described herein. Further, where the device 700 is implemented in a cloud computing system, the various hardware components may belong to separate physical systems. For example, the processor 720 may include a first processor in a first server and a second processor in a second server.

In accordance with one or more of the aforementioned embodiments, the methods, processes, and/or operations described herein may be performed by code or instructions to be executed by a computer, processor, controller, or other signal processing device. The computer, processor, controller, or other signal processing device may be those described herein or one in addition to the elements described herein. Because the algorithms that form the basis of the methods (or operations of the computer, processor, controller, or other signal processing device) are described in detail, the code, or instructions for implementing the operations of the method embodiments may transform the computer, processor, controller, or other signal processing device into a special-purpose processor for performing the methods described herein.

Also, another embodiment may include a computer-readable medium, e.g., a non-transitory computer-readable medium, for storing the code or instructions described above. The computer-readable medium may be a volatile or non-volatile memory or other storage device, which may be removably or fixedly coupled to the computer, processor, controller, or other signal processing device which is to execute the code or instructions for performing the operations of the system and method embodiments described herein.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Although the various exemplary embodiments have been described in detail with particular reference to certain exemplary aspects thereof, it should be understood that the invention is capable of other example embodiments and its details are capable of modifications in various obvious respects. As is apparent to those skilled in the art, variations and modifications can be affected while remaining within the spirit and scope of the invention. The embodiments may be combined to form additional embodiments. Accordingly, the foregoing disclosure, description, and figures are for illustrative purposes only and do not in any way limit the invention, which is defined by the claims. The embodiments may be combined to form additional embodiments.

## Claims

1. A path computation element configured to calculate a path through a network, comprising:
at least one processor; and
at least one memory storing instructions, that when executed by the at least one processor, cause the path computation element at least to:
receive a traffic engineered (TE) path expression including a plurality of segments;
calculate first portion of the path through the network based upon a first segment of the plurality of segments of the TE path expression;
determine if the calculated path has reached its end point;
calculate a next portion of the path through the network based upon a next segment of the plurality of segments of the TE path expression when the calculated path has not reached its end point; and
perform post processing on the calculated path based upon the received TE path expression when the calculated path has reached its end point.

2. The path computation element of claim 1, wherein the segments of the plurality of segments includes an instruction, a terminator, and a quantification.

3. The path computation element of claim 2, wherein the instruction includes parameters relating to a portion of the network.

4. The path computation element of claim 2, wherein the terminator identifies a type of node in the network where a portion of the path associated with the segment should end.

5. The path computation element of claim 2, wherein quantification defines a number of hops allowed along a portion of the path associated with the segment.

6. The path computation element of claim 1, wherein each segment of the plurality of segments is associated with a portion of the network.

7. The path computation element of claim 1, wherein performing post processing on the calculated path based upon the received TE path expression includes performing label stack reduction along the calculated path based upon the TE path expression.

8. A method to calculate a path through a network, comprising:
receiving a TE path expression including a plurality of segments wherein the segments of the plurality of segments includes an instruction, a terminator, and a quantification;
calculating first portion of the path through the network based upon a first segment of the plurality of segments of the TE path expression;
determining if the calculated path has reached its end point; and
calculating a next portion of the path through the network based upon a next segment of the plurality of segments of the TE path expression when the calculated path has not reached its end point.

9. The method of claim 8, further comprising performing post processing on the calculated path based upon the received TE path expression when the calculated path has reached its end point.

10. The method of claim 9, wherein performing post processing on the calculated path based upon the received TE path expression includes performing label stack reduction along the calculated path based upon the TE path expression.

11. The method of claim 8, wherein the instruction includes parameters relating to a portion of the network.

12. The method of claim 8, wherein the terminator identifies a type of node in the network where a portion of the path associated with the segment should end.

13. The method of claim 8, wherein quantification defines a number of hops allowed along a portion of the path associated with the segment.
